# EUROPEAN PATENT SPECIFICATION

(11) **EP 1 170 186 B1**
(45) Date of publication and mention of the grant of the patent: **03.08.2005**
(21) Application number: 01305659.3
(22) Date of filing: 29.06.2001
(51) Int. Cl.: B60T 13/68, B60T 7/04, B60T 17/18, B60T 17/20, B60T 17/22, B60T 8/40

(54) **Electro-hydraulic braking system**
Elektro-hydraulische Bremsanlage
Système de freinage électro-hydraulique

(30) Priority: 01.07.2000 GB 0016147
(43) Date of publication of application: 09.01.2002
(73) Proprietor: TRW Limited, London W1Y 4DJ (GB)
(72) Inventor: Harris, Alan Leslie, Coventry, CV7 7DU (GB); Martin, Peter, West Midlands, B73 6BE (GB)
(74) Representative: W.P. Thompson & Co.

(56) References cited:
- WO-A-00/53476
- DE-A- 19 914 400
- DE-C- 19 828 552
- US-A- 5 291 675
- US-A- 6 065 815
- US-B1- 6 421 598

## Description

The present invention relates to electro-hydraulic braking EHB systems for motor vehicles.

A typical EHB system for a vehicle comprises a brake pedal, respective braking devices connected to the vehicle wheels and which are capable of being brought into communication with electronically controlled control valves in order to apply and modulate hydraulic fluid under pressure to the braking devices, a hydraulic pump driven by an electric motor, and a high pressure hydraulic pressure accumulator fed by said pump for the provision of hydraulic fluid under pressure which can be passed to the braking devices via the control valves in order to apply hydraulic fluid under pressure to the braking devices in so called "brake by wire" mode in proportion to the driver's braking demand as sensed at the brake pedal. The EHB system is controlled by an electronic controller (ECU).

The pressure accumulator, motor driven pump and control valves together form a hydraulic control unit (HCU). Driver's braking demand can be sensed in any of a number of different ways, including measurement of pedal travel, pedal actuation velocity, pedal force and brake pressure, the braking demand being evaluated in the ECU.

In order to make the EHB system "feel" like a conventional braking system in so-called "push-through" mode of braking in the event of failure of the brake-by-wire mode, a simulation unit is also provided which is connected hydraulically to the brake pedal and which, by increasing the volume under pressure, allows the brake pedal to be depressed to an extent comparable with that of conventional systems. The brake pedal acts on the simulation unit which comprises the means for measuring the actuation of the brake pedal and a means for simulating the pedal "feel" for the driver. The simulation unit also includes a hydraulic master cylinder which is arranged to supply the wheel brakes of at least one axle of the vehicle with pressurised fluid in the event that the electro-hydraulic power system is out of order, for example as a result of faults in the voltage supply.

Since the pressure accumulator of such an EHB system can contain only a specific volume of brake fluid, its size should normally be specified such that it can supply sufficient brake fluid as required by the brakes under all braking conditions. However, there is a potential problem that, if the pump output is seriously reduced as a result, for example, of a falling supply voltage, the pressure accumulator is not recharged as quickly as the brake fluid is consumed by the brakes. In other words, the pump delivery rate in such circumstances is reduced below the average consumption of the wheel brakes so that the pressure accumulator fails to be recharged. This problem arises particularly in the case of cadence braking (i.e. repeated pumping of the brake pedal) and during various conditions of ABS braking, particularly on so-called chequerboard road surfaces.

Therefore the problem underlying the present invention is to reduce the brake fluid consumption from the pressure accumulator by the wheel brakes, at least in certain circumstances, whereby to increase the operating time of the pressure accumulator, ie to increase the time for which the pressure accumulator is able to satisfy the demand for brake fluid by the brakes.

From US-A-6367890 there is known an electro-hydraulic braking system of the converted type mentioned initially herein wherein the creation of the switch-on signal for the accumulator pump is dependent upon pressure gradient threshold values selected with the aid of one or more reference wheel-brake pressure thresholds, which indicate whether or not a volume demand exists in the braking system. The pressure gradient variable is thus used as the basis for the actuation or switch-on condition of the pump of the braking system to prevent the pressure from falling below the lowest threshold value.

From US-A-5291675 there is known a fluid pressure control system in a braking vehicle arrangement which includes a fluid pressure control valve capable of adjusting and outputting an output pressure from a fluid pressure supply source capable of outputting a constant fluid pressure in accordance with the operation amount of the operating member and a stroke accumulator connected to the pressure chamber. The stroke accumulator is of a structural arrangement such that the resilient biasing force acting on the accumulator piston by the movement of the back-up piston toward the accumulator piston with the abnormal reduction in fluid pressure in the pilot chamber connected to the fluid pressure supply source is increased more than the fluid pressure acting on the accumulator piston, when the fluid pressure in the pilot chamber is normal, whereby it is possible to prevent the amount in which the operating member operates from being increased more than necessary when the output fluid pressure from the fluid pressure supply source is abnormally reduced.

In accordance with the present invention, this is achieved in that the system includes a means for detecting the occurrence of a progressively falling trend in the accumulator pressure and, when such an occurrence is detected, modifying the brake pressure in such a manner that the brake fluid consumption by the wheel brakes is reduced, whilst at least maintaining the demanded vehicle deceleration, the reduction in the brake fluid consumption by the wheel brakes being achieved by reducing the average brake pressure.

The average brake pressure can be reduced by, for example, limiting the peak(s) of the maximum brake pressure and/or the peak(s) of the minimum brake pressure (in this case the vehicle deceleration initially decreases but this is not a problem since the driver will himself compensate by changing his driver's braking demand in a critical situation), and/or clipping the ceiling of the maximum brake pressure and/or the floor of the minimum brake pressure, and/or changing the rise rate and/or falling rate of the brake pressure, and/or reducing the boost ratio between the driver's braking demand and the brake pressure, and/or slowing up the pressure decay rate.

Preferably, for safety reasons, the reduction in the average braking pressure is used only when the driver's braking demand behaviour remains unchanged, at least for a preset period of time.

Advantageously, in the event that the modified brake pressure behaviour is found to correspond to the driver's braking demand behaviour, the system is arranged to be switched over to the "push-through" mode described hereinbefore.

Preferably, the detection of a progressively falling trend of the accumulator pressure is based on the observed accumulator pressure behaviour, and/or the observed brake pressure behaviour, and/or the driver's demand behaviour and/or combinations of the latter.

The invention is described further hereinafter, by way of example only, with reference to the accompanying drawings, in which: -
Fig. 1 is a diagrammatic illustration of a typical conventional electro-hydraulic braking system (EHB) to which the present application is applicable; and
Figs 2 to 5 are curves of accumulator pressure, brake pressure and drive demand pressure against time to illustrate different operating modes to achieve functions applicable to various embodiments of the present invention.

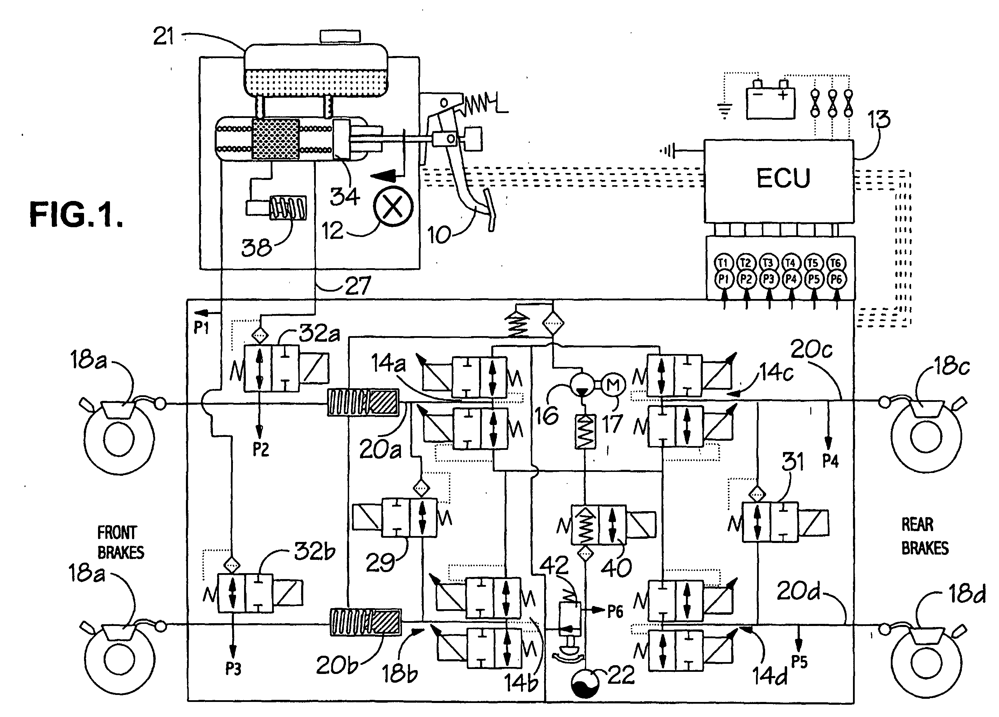

With reference first to fig 1, the illustrated EHB system comprises a brake pedal 10 with an associated travel sensor 12 for the acquisition of the driver's braking demand. The driver's demand is transferred to an electronic control unit (ECU) 13, evaluated there, and used as the source for the generation of electrical control signals for proportional solenoid control valves 14a, 14b, 14c, 14d, a hydraulic pump 16 driven by an electric motor 17, wheel brakes 18a, 18b of one axle supplied with hydraulic fluid by electrically actuated brake channels 20a, 20b and wheel brakes 18c, 18d of the other axle supplied by electrically actuated channels 20c, 20d. Hydraulic fluid for the system is stored in a reservoir 21.

Under normal braking conditions, brake pressure modulation in the electrically actuated brake channels 20a, 20b, 20c, 20d is effected in a known ("brake-by-wire") manner by means of the proportional solenoid control valves 14a, 14b, 14c and 14d, the brake pressure being provided by a pressure accumulator/reservoir 22 whose pressure is maintained by the pump 16 operated by the electric motor 17. The accumulator/reservoir 22 can be selectively isolated by a solenoid operated valve 40 and a manually operable valve 42.

Pressure sensors (not shown) monitor the hydraulic pressure at the wheel brakes 18a, 18b of the front axle and pressure sensors (not shown) monitor the hydraulic pressure at the wheel brakes 18c, 18d of rear axle. Further pressure sensors monitor the pressure within a push-through circuit 27 for the right and left front wheel brakes and the supply pressure in the circuit of pump 16. Respective solenoid valves 29 and 31 enable the brake channels 20a, 20b and 20c, 20d to be coupled together.

The push-through circuit 27 includes solenoid controlled valves 32a, 32b to enable these circuits to be closed (open-circuited) during normal brake by wire operation.

The push-through arrangement includes a master-cylinder 34 coupled to the brake pedal 10 and to the circuit 27, the master cylinder enabling the front brakes to be actuated manually in the event of failure of the brake-by-wire system. Coupled to the circuit 27 is a travel simulator 38 which is activated hydraulically by master-cylinder pressure to give "feel" to the driver during operation of the brakes in brake-by-wire mode.

The EHB system described this far is already known. In operation, the system is controlled by means of the ECU 13 whereby to control the brake actuators 18a-18d in accordance with the drivers braking demand established by monitoring the actuation of the foot pedal 10 using the travel sensor 12. Fluid pressure for operating the brake actuators is supplied by the pressurised reservoir/accumulator 22.

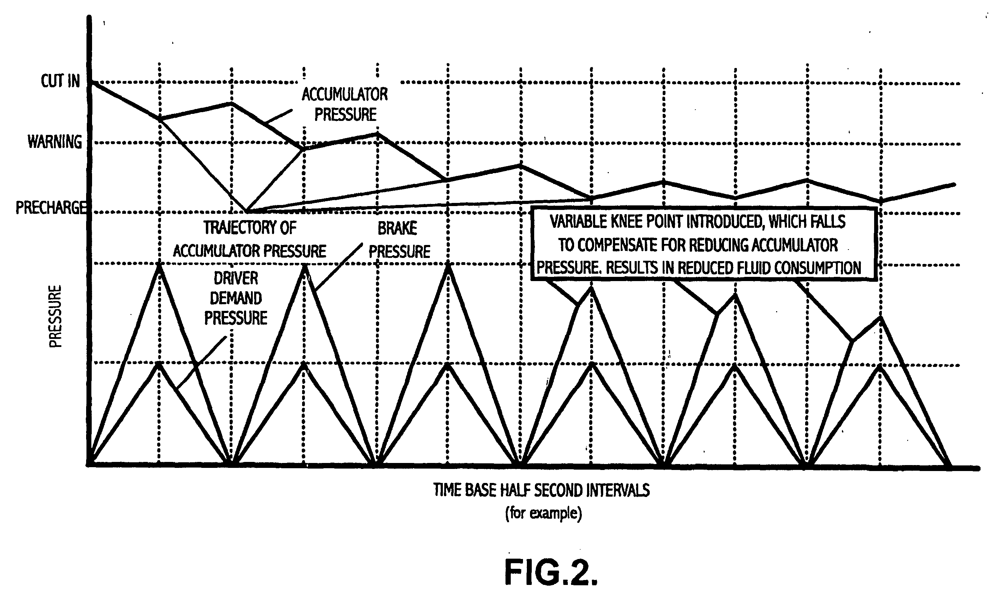

As explained hereinbefore, the objective of the present invention is to seek to reduce the brake fluid consumption from the pressure accumulator 22 by the wheel brakes 18a - 18d, at least in certain circumstances, whereby to increase the operating time of the pressure accumulator 22, ie to increase the time for which the pressure accumulator 22 is able to satisfy the demand for brake fluid by the brakes. This can be achieved by reducing the average brake pressure in the brake actuators. One way in which the average brake pressure can be reduced for this purpose is to arrange for the ceiling of the maximum brake pressure to be limited following detection of a progressively falling trend in the pressure in the accumulator 22, as illustrated in fig. 2 where the pressure pulses beyond the third pulse are progressively restricted. Fig. 2 also shows an alternative/additional possibility of introducing a variable knee point, which falls to compensate for reducing accumulator pressure. This arrangement again assists a reducing fluid consumption.

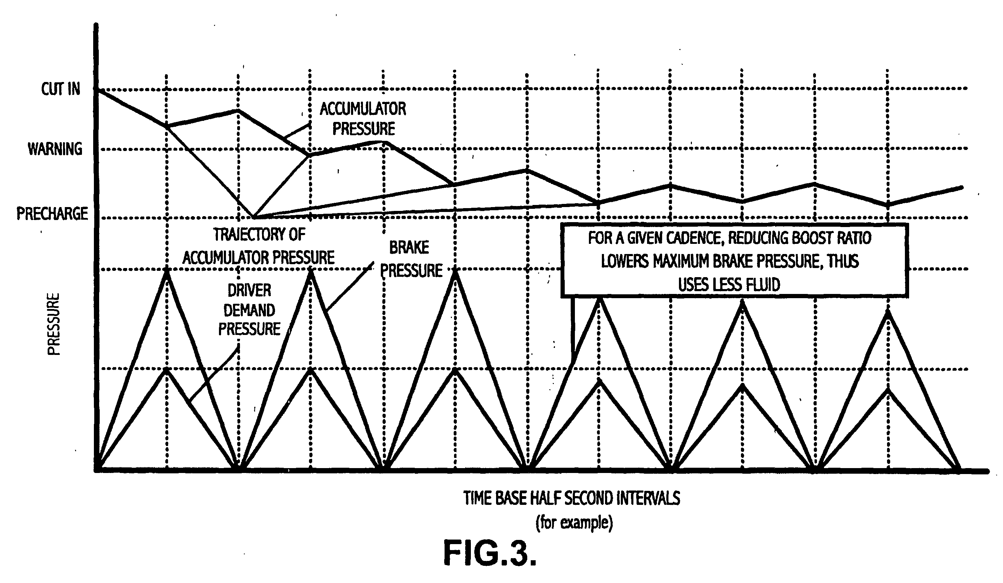

Further possibilities for reducing the fluid consumption are to reduce the boost ratio between the driver's braking demand and the brake pressure, and to change the rise rate and/or falling rate of the brake pressure, for example as illustrated in Fig. 3.

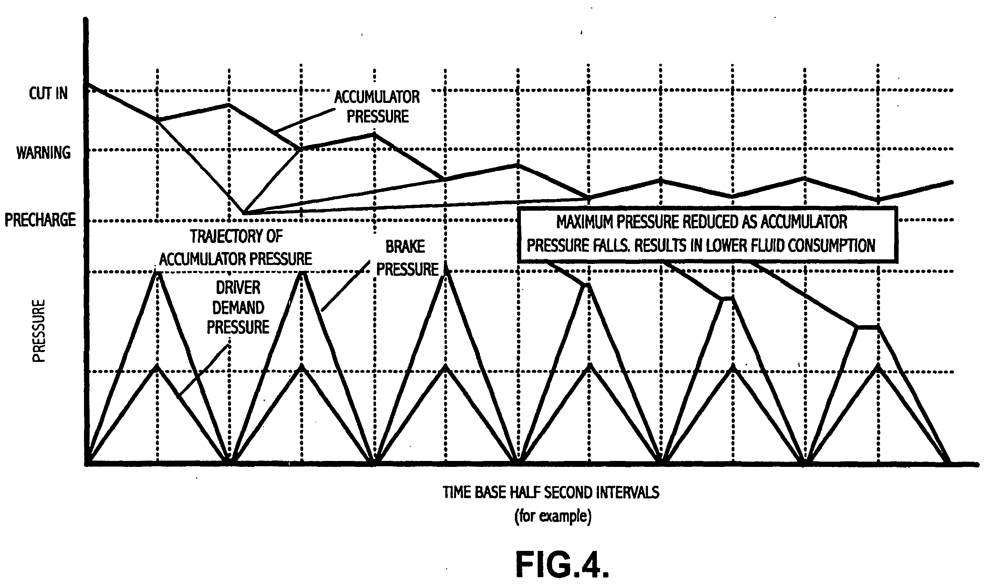

A still further possibility for reducing the fluid consumption is to clip the ceilings of the maximum brake pressure (and/or the floor of the minimum brake pressure), as illustrated in Fig. 4.

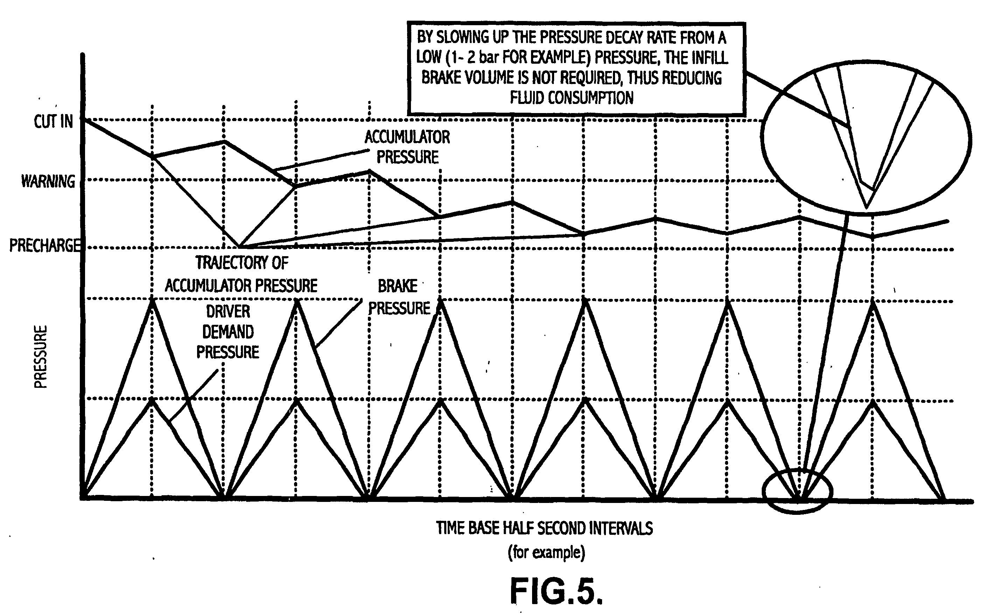

A still further possibility for reducing the fluid consumption is to limit the peaks of the minimum brake pressure and also to slow up the pressure decay rate, for example from 1 to 2 bar, whereby the infill brake volume is not required, as illustrated in Fig. 5.

## Claims

1. An electro-hydraulic braking system of the type capable of operating in a brake-by-wire mode wherein hydraulic pressure is applied from a charged pressure accumulator to braking devices (18a-18d) at the vehicle wheels in proportion to the driver's braking demand as sensed electronically at a brake pedal (10), and in a push-through mode wherein hydraulic pressure is applied to the braking devices (18a-18d) at the vehicle wheels by way of a master cylinder (34) coupled mechanically to the brake pedal (10), and which includes a hydraulic simulator (38) which is connected hydraulically to the master cylinder (34) for providing improved feel for the driver through the brake pedal (10) in the push-through operating mode, and having means (13) for detecting the occurrence of a progressively falling trend in the accumulator pressure and, when such an occurrence is detected, modifying the brake pressure in such a manner that the brake fluid consumption by the wheel brakes is reduced, whilst at least maintaining the demanded vehicle deceleration, the reduction in the brake fluid consumption by the wheel brakes being achieved by reducing the average brake pressure.

2. An electro-hydraulic braking system as claimed in claim 1, wherein for reducing the average brake pressure the system includes means for limiting the peak(s) of the maximum brake pressure and/or the peak(s) of the minimum brake pressure.

3. An electro-hydraulic braking system as claimed in claim 1 or 2, wherein for reducing the average brake pressure the system includes means for clipping the ceiling of the maximum brake pressure and/or the floor of the minimum brake pressure.

4. An electro-hydraulic braking system as claimed in claim 1, 2 or 3, wherein for reducing the average brake pressure system includes means for changing the rise rate and/or falling rate of the brake pressure.

5. An electro-hydraulic braking system as claimed in claim 1, 2, 3 or 4, wherein for reducing the average brake pressure the system includes means for reducing the boost ratio between the driver's braking demand and the brake pressure.

6. An electro-hydraulic braking system as claimed in claim 1, 2, 3, 4 or 5, wherein for reducing the average brake pressure the system includes means for slowing up the pressure decay rate.

7. An electro-hydraulic braking system as claimed in any of claims 1 to 6, having means whereby, in the event that the modified brake pressure behavior is found to correspond to the driver's braking demand behavior, the system is switched over to the "push-through" mode.

8. An electro-hydraulic braking system as claimed in any of claims 1 to 7 having means whereby the detection of a progressively falling trend of the accumulator pressure is based on the observed accumulator pressure behavior, and/or the observed brake pressure behavior, and/or the driver's braking demand behavior and/or combinations of the latter.

9. An electro-hydraulic braking system as claimed in any of claims 1 to 8, wherein the reduction in the average braking pressure is used only when the driver's braking demand behavior remains unchanged, at least for a preset period of time.

## Patentansprüche

1. Elektrohydraulisches Bremssystem des Typs, der in der Lage ist, in einem elektrischen Bremssteuerungsmodus betrieben zu werden, wobei hydraulischer Druck von einem geladenen Druckbehälter an Bremsvorrichtungen (18a-18d) an die Fahrzeugräder in Proportion zum Bremsbedarf des Fahrers, wie er elektronisch an einem Bremspedal (10) erfasst wird, angelegt wird, und der in der Lage ist, in einem Durchdrückmodus betrieben zu werden, wobei hydraulischer Druck an die Bremsvorrichtungen (18a-18d) an die Fahrzeugräder mittels eines Hauptbremszylinders (34) angelegt wird, der mit dem Bremspedal (10) mechanisch gekoppelt ist, und der einen hydraulischen Simulator (38) umfasst, der hydraulisch mit dem Hauptbremszylinder (34) verbunden ist, um dem Fahrer über das Bremspedal (10) ein besseres Bremsgefühl in dem Durchdrückbetriebsmodus bereitzustellen, und der über Mittel (13) zum Erfassen des Auftretens einer progressiv abfallenden Tendenz des Behälterdrucks aufweist, und der, wenn ein derartiges Auftreten erfasst wird, den Bremsdruck in einer derartigen Weise modifiziert, dass der Bremsfluidverbrauch durch die Radbremsen verringert wird, während zumindest die angeforderte Fahrzeugverzögerung aufrechterhalten wird, wobei der Bremsfluidverbrauch durch die Radbremsen erreicht wird, indem der durchschnittliche Bremsdruck verringert wird.

2. Elektrohydraulisches Bremssystem nach Anspruch 1, wobei das System Mittel zur Begrenzung der Spitze(n) des maximalen Bremsdrucks und/oder der Spitze(n) des minimalen Bremsdrucks umfasst, um den durchschnittlichen Bremsdruck zu verringern.

3. Elektrohydraulisches Bremssystem nach Anspruch 1 oder 2, wobei das System Mittel zum Abschneiden des oberen Teils des maximalen Bremsdrucks und/oder des unteren Teils des minimalen Bremsdrucks umfasst, um den durchschnittlichen Bremsdruck zu verringern.

4. Elektrohydraulisches Bremssystem nach Anspruch 1, 2 oder 3, wobei das System Mittel zum Ändern der Anstiegsgeschwindigkeit und/oder der Abfallgeschwindigkeit des Bremsdrucks umfasst, um den durchschnittlichen Bremsdruck zu verringern.

5. Elektrohydraulisches Bremssystem nach Anspruch 1, 2, 3 oder 4, wobei das System Mittel zur Verringerung des Verstärkungsverhältnisses zwischen dem Bremsbedarf des Fahrers und dem Bremsdruck umfasst, um den durchschnittlichen Bremsdruck zu verringern.

6. Elektrohydraulisches Bremssystem nach Anspruch 1, 2, 3, 4 oder 5, wobei das System Mittel zum Verlangsamen der Druckabfallgeschwindigkeit umfasst, um den durchschnittlichen Bremsdruck zu verringern.

7. Elektrohydraulisches Bremssystem nach einem der Ansprüche 1 bis 6, das Mittel aufweist, wodurch das System in den "Durchdrückmodus" umgeschaltet wird, wenn sich herausstellt, dass das modifizierte Bremsdruckverhalten dem Bremsbedarfsverhalten des Fahrers entspricht.

8. Elektrohydraulisches Bremssystem nach einem der Ansprüche 1 bis 7, das Mittel aufweist, bei dem die Erfassung einer progressiv abfallenden Tendenz des Speicherdrucks auf dem beobachteten Speicherdruckverhalten, dem beobachteten Bremsdruckverhalten, dem Bremsdruckverhalten des Fahrers und/oder Kombinationen des Letzteren basiert.

9. Elektrohydraulisches Bremssystem nach einem der Ansprüche 1 bis 8, wobei die Verringerung des durchschnittlichen Bremsdrucks nur dann angewendet wird, wenn das Bremsbedarfsverhalten des Fahrers mindestens während einer voreingestellten Zeitdauer unverändert bleibt.

## Revendications

1. Système de freinage électro-hydraulique du type capable de fonctionner dans un mode de freinage à commande électronique dans lequel la pression hydraulique est appliquée depuis un accumulateur de pression chargé sur des dispositifs de freinage (18a-18d) aux roues du véhicule, proportionnellement à la demande de freinage du conducteur telle qu'elle est détectée électroniquement à une pédale de frein (10), et dans un mode à commande mécanique dans lequel la pression hydraulique est appliquée sur les dispositifs de freinage (18a-18d) aux roues du véhicule au moyen d'un maître-cylindre (34) accouplé mécaniquement à la pédale de frein (10), et qui comprend un simulateur hydraulique (38) qui est raccordé hydrauliquement au maître-cylindre (34) pour fournir une meilleure appréciation au conducteur par l'intermédiaire de la pédale de frein (10) dans le mode de fonctionnement à commande mécanique, et comportant un moyen (13) pour détecter la survenance d'une tendance de chute progressive de la pression de l'accumulateur et, lorsqu'une telle survenance est détectée, modifiant la pression de freinage d'une façon telle à ce que la consommation de fluide hydraulique de frein par les freins des roues soit réduite, tout en maintenant au moins la décélération demandée du véhicule, la réduction de la consommation de fluide hydraulique de frein par les freins des roues étant obtenue en réduisant la pression de freinage moyenne.

2. Système de freinage électro-hydraulique tel que revendiqué dans la revendication 1, dans lequel, pour réduire la pression de freinage moyenne, le système comprend un moyen pour limiter la (les) pointe(s) de pression de freinage maximale et/ou la (les) pointe(s) de pression de freinage minimale.

3. Système de freinage électro-hydraulique tel que revendiqué dans la revendication 1 ou 2, dans lequel, pour réduire la pression de freinage moyenne, le système comprend un moyen pour écrêter le plafond de la pression de freinage maximale et/ou le plancher de la pression de freinage minimale.

4. Système de freinage électro-hydraulique tel que revendiqué dans la revendication 1, 2 ou 3, dans lequel, pour réduire la pression de freinage moyenne, le système comprend un moyen pour changer la vitesse de montée et/ou de chute de la pression de freinage.

5. Système de freinage électro-hydraulique tel que revendiqué dans la revendication 1, 2, 3 ou 4, dans lequel, pour réduire la pression de freinage moyenne, le système comprend un moyen pour réduire le rapport d'amplification entre la demande de freinage du conducteur et la pression de freinage.

6. Système de freinage électro-hydraulique tel que revendiqué dans la revendication 1, 2, 3, 4 ou 5, dans lequel, pour réduire la pression de freinage moyenne, le système comprend un moyen pour ralentir la vitesse de décroissance de la pression.

7. Système de freinage électro-hydraulique tel que revendiqué dans l'une quelconque des revendications 1 à 6, ayant un moyen par lequel, au cas où le comportement modifié de la pression de freinage s'avère correspondre au comportement de la demande de freinage du conducteur, le système est commuté dans le mode à commande mécanique.

8. Système de freinage électro-hydraulique tel que revendiqué dans l'une quelconque des revendications 1 à 7, ayant un moyen par lequel la détection d'une tendance de chute progressive de la pression de l'accumulateur est basée sur le comportement observé de la pression de l'accumulateur, et/ou sur le comportement observé de la pression de freinage, et/ou sur le comportement de la demande de freinage du conducteur et/ou sur des combinaisons de ces derniers.

9. Système de freinage électro-hydraulique tel que revendiqué dans l'une quelconque des revendications 1 à 8, dans lequel la réduction de la pression de freinage moyenne n'est utilisée que lorsque le comportement de la demande de freinage du conducteur reste inchangée, au moins pendant une période de temps pré-réglée.
